Europäisches Patentamt

European Patent Office

Office européen des brevets

(11) Veröffentlichungsnummer: **0 248 311 B1**

## (12) EUROPÄISCHE PATENTSCHRIFT

(45) Veröffentlichungstag der Patentschrift: **25.03.92**

(21) Anmeldenummer: **87107581.8**

(22) Anmeldetag: **25.05.87**

(51) Int. Cl.⁵: **C09J 175/00, B29C 45/14, C08G 18/42, C08G 18/08**

(54) Spritzgusskörper und Verfahren zu seiner Herstellung.

(30) Priorität: **06.06.86 DE 3619081**

(43) Veröffentlichungstag der Anmeldung:
**09.12.87 Patentblatt 87/50**

(45) Bekanntmachung des Hinweises auf die
Patenterteilung:
**25.03.92 Patentblatt 92/13**

(84) Benannte Vertragsstaaten:
**DE FR GB IT**

(56) Entgegenhaltungen:
**EP-A- 0 003 521
EP-A- 0 114 185
EP-A- 0 192 946
US-A- 4 335 187**

(73) Patentinhaber: **BAYER AG**

**W-5090 Leverkusen 1 Bayerwerk(DE)**

(72) Erfinder: **Wank, Joachim, Dipl.-Ing.
Zülpicher Strasse 7
W-4047 Dormagen(DE)**
Erfinder: **Waldenrath, Werner, Dipl.-Ing.
Maastrichter Strasse 40
W-5000 Köln 1(DE)**
Erfinder: **Reese, Eckart, Dr.
Aggerstrasse 22
W-4047 Dormagen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Spritzgußkörper aus Metall/Kunststoff-Verbundsystemen mit einer Polyurethan-Haft-(Zwischen)-schicht auf Basis von Polyurethandispersionen und ein Verfahren zu ihrer Herstellung.

Metall-Kunststoff-Verbundsysteme werden beispielsweise in der Elektro- und der Elektronikindustrie für isolierende Gehäuseteile benötigt. Derartige Verbundsysteme werden im allgemeinen hergestellt, indem man die Kontaktelemente mit dem entsprechenden Kunststoffmaterial umspritzt bzw. beschichtet.

Zur Verbesserung der Haftung zwischen Metall- und Kunststoffkörper werden die Metallteile im Bereich der Kunststoffummantelung geprägt, durchbrochen, mäanderförmig geformt, etc. Durch diese Art der mechanischen Veränderung kann man zwar eine hohe Beanspruchbarkeit gegen mechanische Zugbelastung erreichen, jedoch wird hierdurch kein feuchtigkeitsdichter bzw. druckfester Verbund erreicht, da durch den unterschiedlichen Ausdehnungskoeffizienten zwischen Metall- und Kunststoff, Haarrisse beim Abkühlungsprozess auftreten. Für Anwendungen, bei denen die Forderung nach Dampf- und Druckfestigkeit zwingend zu erfüllen ist, wurden zahllose Versuche durchgeführt, um dieses Ziel zu erreichen. Bei bisherigen Lösungen hatte man, nach der Ummantelung bzw. Beschichtung der Metallteile, auf der Innen- und Außenseite der Gehäuse im Bereich der Metallkontakte Harzsysteme aufgebracht, die eine Oberflächenadhäsion sowohl zum Metall als auch zum Kunststoff hatten.

Da es sich hierbei meist um sehr dünne Schichten handelt, hatten diese den Nachteil, daß sie bei mechanischer Beanspruchung Haarrisse bekamen und damit ihre Aufgabe nicht mehr erfüllten.

Es hat daher nicht an Versuchen gefehlt, im Bereich der Ummantelung zwischen Kunststoff und Metall einen Verbund zu erreichen, der die Anforderung hinsichtlich Dampf- und Druckfestigkeit erfüllt. Die bisher bekannte Möglichkeit, dieses Ziel bei einigen wenigen Metall-Kunststoff-Kombinationen zu erreichen, besteht in der Verwendung von Epoxidharzen als Haftvermittler zwischen Metall und Kunststoff. Die Beschränkung auf nur wenige Kunststoffe ist dadurch gegeben, daß Epoxidharze nur zu wenigen Kunststoffmaterialien eine Verbindung eingehen, sehr spröde sind und sich außerdem schwierig verarbeiten lassen, da es sich um ein 2-Komponenten-System handelt.

Aus der US-A-3 538 055 ist bereits bekannt, Kunststoffe oder Metalle mit einem Polyurethankleber zu verkleben. Spritzgußkörper und Verfahren zu ihrer Herstellung sind hieraus nicht bekannt.

In der EP-A 192 946 werden weitgehend lineare, endständige Hydroxylgruppen aufweisende Polyesterurethane, welche aus ganz bestimmten Polyesterdiolen mit spezifisch ausgewähltem engem MG 4000-6000 und bestimmten Diol-Gemischen (Butandiol und Hexandiol) aufgebaut sind, als Material für Zwischenschichten beschrieben. Diese unvernetzten Polyurethane sind typische Haftklebstoffe, die gegebenenfalls auf etwa 50 bis 100°C erhitzt und damit aufgeschmolzen ("aktiviert") werden. Mittels Haftklebstoffen können Materialien verklebt werden oder es können auch auf Metalloberflächen mit der Klebstoffschicht ein auf 120 bis 200°C erhitzter flüssiger Kunststoff im Spritzgußverfahren aufgebracht werden.

Auch die dort beanspruchte Verwendung bezieht sich auf Klebstoffe bzw. zum Verkleben von Kunststoffen mit sich selbst und anderen Substraten.

In der US 4 335 187 werden (vorbehandelte) Metalle und Polycarbonat-Formteile mittels einer viskosen Reaktionsmischung eines NCO-Prepolymers plus einem trifunktionellen Vernetzer an der Grenzfläche versehen und diese Reaktionsmischung anschließend ausgehärtet. Es werden typische Verklebungen (z.B. zwischen einem Metallrahmen und einer Polycarbonat-Windschutzscheibe) mittels Auftragung einer NCO-Prepolymer/Vernetzer-Mischung von begrenzter Topfdauer und nach anschließender Aushärtung der Klebschicht (z.B. 5 Std/82°C) vorgenommen. Dabei muß noch das Metall vorgereinigt, vorgeätzt und mit einem Haftvermittler auf Basis eines Phenolharzes vorbehandelt werden (15/120°C), um das gewählte NCO-Prepolymer/Vernetzer-System (nach Aushärtung zum Elastomer) zu binden. Das Verfahren verklebt also Formteile (in offenbar dicker Gießschicht) über ein Reaktiv-Polyurethan begrenzter Topfzeit, wobei das Metall vorher noch mit einer zusätzlichen Haftschicht (Phenolharz) versehen sein muß.

Aufgabe der vorliegenden Erfindung war es, dampf- und druckfeste Metall-Kunststoff-Verbundsysteme in einfacher Weise herzustellen.

Gegenstand der Erfindung sind Spritzgußkörper, enthaltend ein über einen Haftvermittler verbundenes Metall-Kunststoff-Verbundsystem, dadurch gekennzeichnet, daß als Haftvermittler ein Polyurethan auf Basis von Polyurethandispersionen enthalten ist.

Als Kunststoff ist in einer bevorzugten Ausführungsform ein Thermoplast enthalten, insbesondere ein Celluloseester, PVC, Polyamid, Polycarbonat, Polysulfon, ABS, Polymethylmethacrylat, Polyphenylensulfid, Polyalkylenterephthalat, Polyarylenterephthalat, Polyolefin oder Polyphosphonate.

Gegenstand der Erfindung ist weiterhin ein Verfahren zur Herstellung eines Spritzgußkörpers aus einem Metall-Kunststoff-Verbundsystem durch Umspritzen der Metallkomponente mit der thermoplastischen Schmelze eines Kunststoffes, dadurch gekennzeichnet, daß als Haftvermittler zwischen Metall und Kunststoff ein Polyurethandispersionssystem verwendet wird.

Erfindungsgemäß geeignete Metallformkörper sind solche aus bekannten Nichteisen- und Eisenmetallen, vorzugsweise Kupfer und deren Legierungen sowie Edelmetalle.

Zur Herstellung der erfindungsgemäß geeigneten Polyurethanschichten werden wäßrige, zu transparenten Filmen auftrocknende Dispersionen von vorzugsweise linearen Polyesterpolyurethanen verwendet. Geeignete Polyurethandispersionen sind beispielsweise solche auf Basis von linearen Polyesterdiolen, aromatischen oder aliphatischen Diisocyanaten und gegebenenfalls den üblichen Kettenverlängerungsmitteln, die unter Mitverwendung von ionischen Aufbaukomponenten entsprechend der US-A-34 79 310 oder der DE-A-14 95 847 hergestellt worden sind. Sehr gut geeignet sind auch die wäßrigen Dispersionen von Carboxylat- und Sulfonatgruppen aufweisenden, vorzugsweise linearen Polyesterpolyurethanen, wie sie gemäß DE-A-28 04 609 erhalten werden können. Die Dispersionen werden im allgemeinen mit einem Feststoffgehalt von 10 bis 40 Gew.-% verwendet.

Geeignete Polyurethane sind ein Polyurethandispersions-System auf Basis eines linearen Polyesterurethans, vorzugsweise auf Basis von Polyalkylenadipinat oder Polyalkylenphthalat, mit einem Molekulargewicht von 1000 bis 8000, vorzugsweise von etwa 2000, und einem Diisocyanat, vorzugsweise Toluylendiisocyanat oder Hexamethylendiisocyanat, unter Kettenverlängerung mit Sulfonsäure- oder Carbonsäure-haltigen Diaminen, gegebenenfalls im Gemisch mit aliphatischen Diaminen.

In einer bevorzugten Ausführungsform werden die Metallteile im Bereich der Umhüllung mit Kunststoff mit dem erfindungsgemäß einzusetzenden PU-System auf Basis von Polyalkylenadipinaten und Arylendiisocyanaten mit endständigen NCO-Gruppen oder unter Zusatz von Polyisocyanaten zu den PU-Systemen, beschichtet, da diese PU-Systeme überraschenderweise sowohl eine innige Verbundhaftung zu NE-Metallen wie Gold, Zink, Kupfer und deren Legierungen, Aluminium, Chrom, Vanadium und zu Stahl und Eisen sowie gleichfalls zu den meistbekannten thermoplastischen Kunststoffen wie PVC, SAN, Celluloseester, Polycarbonat, ABS, PPS, Polysulfon, Polyamid, PPO, Polyalkylenterephthalat aufweisen und diese Verbundhaftung auch bei den hohen Temperaturen der Kunststoffschmelze besteht und beim Abkühlen erhalten bleibt.

Das Polyurethan kann entweder im Tauch-, Spritz-, Rakel- oder Druckverfahren als Dispersion auf die Metallformkörper aufgebracht werden, wobei die aufzubringende Zwischenschicht nur im Bereich der Ummantelung mit thermoplastischem Kunststoff erforderlich ist. Die Menge der Dispersion bzw. Lösung wird so bemessen, daß die Stärke der Zwischenschicht im getrockneten Zustand 2 - 80 $\mu$m, vorzugsweise 15 - 30 $\mu$m beträgt. Gegebenenfalls verwendete Lösungs-oder Dispergiermittel werden nach üblichen Verfahren abgetrocknet. Die PU-Schicht stellt bei Raumtemperatur völlig klebfreie thermoplastische Schichten dar.

Die Kunststoffschichten sind vorzugsweise aus Polycarbonat, Polyamid, Polyalkylenterephthalat, Polyarylenterephthalat, Celluloseester, PVC, Polysulfon, Polystyrol, Poly-Styrol-Acrylnitril-Copolymerisaten, ABS, Polymethylmethacrylat, Polyolefin, Polyphenylensulfid, Polyoxymethylen und Polyphenylenoxid.

Erfindungsgemäß geeignete Polycarbonate sind solche aus aromatischen Polycarbonaten mit Gewichtsmittelmolekulargewichten $\overline{M}w$ von 25 000 bis 200 000, vorzugsweise von 30 000 bis 120 000 und insbesondere von 30 000 bis 80 000 ($\overline{M}w$ ermittelt in $CH_2Cl_2$ bei 20°C und einer Konzentration von 0,5 g pro 100 ml).

Geeignete lineare Polyarylsulfone sind alle bekannten aromatischen Polysulfone oder Polyethersulfone mit $\overline{M}w$ (Gewichtsmittelmolekulargewicht gemessen beispielsweise mittels Lichtstreuung) zwischen etwa 15 000 und etwa 55 000, vorzugsweise zwischen etwa 20 000 und etwa 40 000. Derartige Polyarylsulfone sind beispielsweise in DE-A-17 19 244 bzw. US-A-33 65 517 beschrieben.

Geeignete verzweigte Polyarylsulfone sind insbesondere die verzweigten Polyarylethersulfone gemäß DE-A-23 05 413 bzw. US-A-39 60 815, deren $\overline{M}w$ (Gewichtsmittelmolekulargewicht, gemessen beispielsweise mittels Lichtstreuung) zwischen etwa 15 000 und etwa 50 000, vorzugsweise zwischen etwa 20 000 und 40 000 liegen. Thermoplastische Polymethylmethacrylate sind beispielsweise die im Handel befindlichen Plexiglas-Typen. Thermoplastische Acrylnitril-Butadien-Styrol-Copolymerisate sind insbesondere Mischungen aus

a) 50 bis 70 Gew.-% eines oder mehrerer Pfropfprodukte und

b) 95 bis 30 Gew.-% eines oder mehrere thermoplastischer Harze.

Pfropfprodukte (a) sind bevorzugt Polymerisate, die durch Polymerisation von Pfropfmonomeren in Anwesenheit eines Kautschuks als Pfropfbasis erhalten werden. Der Kautschukanteil ist bevorzugt 5 bis 80 Gew.-%, er hängt auch vom Polymerisationsverfahren ab.

Als Pfropfbasis kommt insbesondere Polybutadien, Naturkautschuk, Butadien/Acrylnitril-Copolymerisat und Butadien/Styrol-Co- und Blockpolymerisat in Betracht. Verwendbar sind auch Acrylester-Vinylether-

3

Polymerisate sowie EPDM-Terpolymerisate. Pfropfmonomere sind hauptsächlich Styrolgemische aus Styrol und Acrylnitril, bevorzugt im Gewichtsverhältnis 90:10 und 50:50, Gemische aus Styrol und Methyl(meth)-acrylat, bevorzugt im Gewichtsverhältnis 5:95 bis 95:5 sowie Styrol/Acrylnitril/Methyl(meth)acrylat-Gemische.

Die Herstellung solcher Pfropfprodukte ist an sich bekannt. Man kann die Pfropfmonomeren in Gegenwart eines Kautschuklatex in Emulsion polymerisieren. Die Pfropfreaktion wird dann mit einem radikalischen Initiator gestartet. Ist der Kautschuk unvernetzt und werden bei der Pfropfreaktion bestimmte Mengenverhältnisse von Pfropfmonomeren und Pfropfgrundlagen eingehalten, so ist die Größe der Kautschukteilchen im Latex bestimmend für die Teilchengröße des resultierenden Pfropfpolymerisats. Die Pfropfhülle aus chemisch an die Kautschukteilchen gebundenen Ketten des Polymerisats der Pfropfmonomeren ist im Verhältnis dünn und ändert die Größe des Kautschukteilchens nicht wesentlich. Als Größe wird hier der $d_{50}$-Wert verstanden, d.h. der Durchmesser oberhalb dessen und unterhalb dessen jeweils 50 % der Durchmesser der Teilchen liegen. Die Pfropfreaktion ist unvollständig, so daß ihr Produkt als Pfropfprodukt bezeichnet wird. Neben dem eigentlichen Pfropfpolymerisat enthält es auch nichtgepfropfte Copolymere der Pfropfmonomeren.

Man kann die Pfropfpolymerisate auch durch Masse/Lösung- oder Masse/Suspensionspolymerisation, vorzugsweise aus Monomer-löslichem Kautschuk herstellen. Die Größe der Pfropfkautschukteilchen wird dann in der Phaseninversionsstufe festgelegt und kann mechanisch (durch Rühren) und durch chemische Beeinflussung des Phasengleichgewichts (Zusatz von Dispergatoren) beeinflußt werden. Im allgemeinen werden bei Masse/Lösungs-Pfropfprozessen Teilchen von 1 μm Durchmesser oder größer erhalten. Der Kautschukgehalt des Pfropfproduktes ist auf maximal 25 Gew.-% beschränkt.

Man kann erfindungsgemäß Produkte verwenden, deren Teilchen eine Größe von 0,05 bis 20 μm haben und solche, in denen ein erheblicher Teil der Pfropfmonomeren im Innern der Kautschukteilchen als Homo- oder Copolymerisat inkludiert ist. Bevorzugte Teilchengrößen sind 0,05 bis 1,2 μm, insbesondere 0,05 bis 0,6 μm. Es ist auch möglich, mehrere verschiedene Pfropfprodukte nebeneinander einzusetzen z.B. zwei Pfropfprodukte, die sich durch den Pfropfgrad (oder durch die Pfropfdichte), die Teilchengröße oder durch beides gleichzeitig unterscheiden. Besonders geeignet ist beispielsweise ein Gemisch aus einem Pfropfprodukt mit Teilchen einer Größe $d_{50}$ von 0,35 und 10 μm und einem Pfropfprodukt mit Teilchen einer Größe $d_{50}$ von 0,05 bis 0,32 μm (so hergestellte ABS-Polymerisate werden auch als Bimodalsysteme bezeichnet).

Bevorzugt enthalten die Pfropfprodukte 35 bis 80 Gew.-%, insbesondere 40 bis 70 Gew.-%, Kautschuk und besitzen Teilchengrößen $d_{50}$ von 0,1 bis 0,5 μm. Sie werden in einer solchen Menge eingesetzt, daß das fertige ABS-Polymerisat 5 bis 25 Gew.-%, bevorzugt 5 bis 20 Gew.-%, Kautschuk enthält.

Das den zweiten Bestandteil des ABS-Polymerisats bildende thermoplastische Harz (b) stellt die durchgehende Matrix dar und ist ein Polymerisat oder Copolymerisat von Styrol, α-Methylstyrol/Acrylnitril/Methyl(meth)acrylat oder Maleinsäureanhydrid. Bevorzugt sind Polystyrol, Styrol-Acrylnitril-Copolymerisate mit einem Acrylnitrilgehalt von 20 bis 35 Gew.-% sowie Methylstyrol-Acrylnitril-Copolymerisate mit einem Acrylnitrilgehalt von 20 bis 31 Gew.-%. Das Gewichtsmittel ($\overline{M}_w$) des Molekulargewichtes dieser Harze ist 50 000 bis 550 000; die molekulare Uneinheitlichkeit U

$$\left(\frac{\overline{M}_w}{\overline{M}_n} - 1 = U\right) \text{ ist } 1,0 \text{ bis } 3,5$$

($M_n$ = Zahlenmittel des Molekulargewichts).

Verwendet man ein einzelnes Pfropfprodukt, so ist es vorteilhaft, wenn die quantitative Zusammensetzung der Pfropfmonomeren und die des Harzes ähnlich oder gleich sind. Verwendet man ein Gemisch von zwei Pfropfprodukten verschiedener Teilchengrößen, dann ist es vorteilhaft, wenn die quantitative Zusammensetzung der Pfropfmonomeren des Pfropfproduktes mit den gröberen Teilchen von der Zusammensetzung des Harzes verschieden ist.

Die thermoplastischen Harze, z.B. Styrol/Acrylnitril oder α-Methylstyrol/Acrylnitril-Copolymerisate können nach bekannten Verfahren hergestellt werden, z.B. durch Massepolymerisation, Lösungspolymerisation, Suspensionspolymerisation und Emulsionspolymerisation.

Pfropfprodukt und thermoplastisches Harz werden häufig getrennt hergestellt, beide meist durch Emulsionspolymerisation. Fallen die Komponenten in Latexform an, so können die Latices gemischt und gemeinsam ausgefällt werden.

Zur Herstellung der Kunststoffschicht geeignete thermoplastische Polystyrole sind Homopolymerisate des Styrols oder Mischpolymerisate des Styrols mit vorzugsweise Acrylnitril und/oder Butadien, und/oder Maleinsäureester, die z.B. durch Suspensionspolymerisation in Gegenwart von Katalysatoren aus den Monomeren bzw. der Mischung der Monomeren mit $\overline{M}w$ von 10 000 bis 600 000 erhalten werden ($\overline{M}w$ wird gemessen in DMF bei c = 5 g/l und 20°C). (Literatur dazu siehe: Beilsteins Handbuch der Organischen Chemie, 4. Auflage, 3. Ergänzungswerk, Bd. 5, Seiten 1163 - 1169, Springer Verlag 1964; H.Ohlinger, Polystyrol, 1. Teil, Herstellungsverfahren und Eigenschaften der Produkte, Springer Verlag 1955.)

Beispiel 1

Eine Kunststoffkappe (Abdeckung für einen Temperaturfühler in einem zylindrischen Glasrohr) mit einem Durchmesser von 15 mm und einer Länge von 20 mm hat im Dombereich zwei durchgängige Kupferkontakte. Zwischen dem Innenraum des mit der Kunststoffkappe verschlossenen Glasrohres und der Umgebung kann eine Dampfdruckdifferenz von 1,8 bar auftreten.

Zur Herstellung der PU-Haftvermittlerschicht wurde eine Polyurethandispersion (Dispercoll® 8100 der BAYER AG, D 5090 Leverkusen) auf Basis eines Hexandiolmischpolyesters, einer aromatischen Dicarbonsäure, Hexamethylendiisocyanat und einem sulfonsäuregruppenhaltigen Diaminkettenverlängerungsmittel verwendet. Die Kupfer-Kontaktdrähte wurden in die Dispersion getaucht und getrocknet, wobei sich eine PU-Haftschicht mit einer Stärke von etwa 25 μm ausbildete. Die Kontaktdrähte wurden dann zur Bildung der Kunststoffkappe mit den unten angegebenen Kunststoffen umspritzt.

Tabelle 1 zeigt die Ergebnisse der Dampfdruckfestigkeit im Bereich des Elektrodendurchgangs ohne und mit Auftrag der erfindungsgemäßen PU-Schicht.

| Eingesetzter Kunststoff | Durchführung bei 1,5 bar Dampfdruckdifferenz | |
| --- | --- | --- |
| | ohne PU-Haftvermittler (Vergleich) | mit PU-Haftvermittler (erfindungsgemäß) |
| Polycarbonat | undicht | dicht |
| 6-6 Polyamid unverstärkt | undicht | dicht |
| 6-6 Polyamid 30 % Kurzglasfasern | | |
| ABS | undicht | dicht |
| PPS | undicht | dicht |
| PVC | undicht | dicht |

Beispiel 2

Ein feuchtigkeitsempfindlicher Transistor wird mit einem thermoplastischen Material feuchtigkeitsdicht umspritzt.

Für die erfindungsgemäßen Versuche wird der Transistor in die erfindungsgemäß zu verwendende Polyurethandispersion getaucht, getrocknet und anschließend mit den unten angeführten Materialien umspritzt.

Als Polyurethandispersion wurde eine ca, 30 %ige anionische Dispersion (Dispercoll® 8066 der BAYER AG, D 5090 Leverkusen) auf Basis eines Adipinsäurealkylendiol-Polyesters vom Molekulargewicht etwa 2250, 2,4-Toluylendiisocyanat und eines Sulfonsäuregruppen enthaltenden Diamins eingesetzt.

Danach wird dieser Transistor 100 Stunden dem Pressure-Cooker-Test unterworfen. Hierzu wird das Bauelement in einem Autoklaven, der mit Wasser gefüllt und auf 119,5°C erhitzt wird, 100 Stunden dieser Dampfatmosphäre ausgesetzt. Nach dieser Zeit wird der Autoklav abgekühlt, gegebenenfalls entlüftet und das Bauteil herausgenommen und anschließend der Funktionsprüfung unterzogen. Danach wird die Funktionstüchtigkeit geprüft im Vergleich zu den Transistoren, die mit den gleichen Materialien umspritzt wurden, jedoch vorher nicht mit den erfindungsgemäßen PU-Haftvermittlern beschichtet wurden.

| Eingesetzter Kunststoff | Funktionsfähigkeit nach 100 h Pressure-Cooker-Test | |
| --- | --- | --- |
| | ohne PU-Haft-vermittler (Vergleich) | mit PU-Haftvermittler (erfindungsgemäß) |
| Polycarbonat | ausgefallen | funktionstüchtig |
| ABS | ausgefallen | funktionstüchtig |
| PPS | ausgefallen | funktionstüchtig |
| PBT | ausgefallen | funktionstüchtig |

**Patentansprüche**

1. Spritzgußkörper, enthaltend ein über einen Haftvermittler verbundenes Metall-Kunststoff-Verbundsystem, dadurch gekennzeichnet, daß die Polyurethan-Haftvermittlerschicht Schichtstärken von 2 bis 80 $\mu$m, vorzugsweise 15 bis 30 $\mu$m aufweist und daß die Polyurethankomponente ein Polyurethandispersionssystem auf Basis eines linearen Polyesterdiols eines Diisocyanats und von carbonsäure- oder sulfonsäurehaltigen Diaminen, gegebenenfalls im Gemisch mit weiteren (cyclo)aliphatischen Diaminen, ist, und daß der thermoplastische Kunststoff ein solcher auf Basis von Celluloseester, PVC, Polyamid, Polycarbonat, Polysulfon, ABS, Polymethylmethacrylat, Polyphenylensulfid, Polyalkylenterephthalat, Polyarylenterephthalat, Polyphenylenoxid, Polyphosphonat und Polyetheresterketon ist.

2. Spritzgußkörper nach Anspruch 1, dadurch gekennzeichnet, daß das Polyesterdiol ein solches auf Basis eines Polyalkylenadipinats oder Polyalkylenphthalats mit einem Molekulargewicht von 1.000 bis 8.000 und das Diisocyanat Toluylendiisocyanat oder Hexamethylendiisocyanat ist.

3. Verfahren zur Herstellung eines über einen Haftvermittler verbundenes Verbundsystem durch Umspritzen der Metallkomponente mit der thermoplastischen Schmelze eines Kunststoffes, dadurch gekennzeichnet, daß als Haftvermittler zwischen Metall und Kunststoff eine Polyurethandispersion im Tauch-, Spritz-, Rakel- oder Druckverfahren auf die Metallformkörper, vorzugsweise im Bereich der Ummantelung mit dem thermoplastischen Kunststoff aufgebracht wird, Lösungs- oder Dispergiermittel abgetrocknet werden, wobei Trockenfilmstärken der Polyurethan-Schicht von 2 bis 80 $\mu$m, vorzugsweise 15 bis 30 $\mu$m eingehalten werden, und die mit der Polyurethan-Haftschicht versehene Metallkomponente mit der thermoplastischen Schmelze eines Kunststoffs umspritzt wird.

4. Verfahren nach Anspruch 3, dadurch gekennzeichnet, daß als thermoplastische Kunststoffe solche auf Basis von Celluloseester, PVC, Polyamid, Polycarbonat, Polysulfon, ABS, Polymethylmethacrylat, Polyphenylensulfid, Polyalkylenterephthalat, Polyphenylenoxid, Polyphoshonat und Polyetheresterketon eingesetzt werden.

**Claims**

1. An injection-moulded article containing a metal/plastics plastics composite system joined by a coupling agent, characterized in that the layer of polyurethane coupling agent has thicknesses of 2 to 80 $\mu$m and preferably 15 to 30 $\mu$m and in that the polyurethane component is a polyurethane dispersion system based on a linear polyesterdiol of a diisocyanate and diamines containing carboxylic or sulfonic acid, optionally in admixture with other (cyclo)aliphatic diamines, and in that the thermoplastic is one based on cellulose ester, PVC, polyamide, polycarbonate, polysulfone, ABS, polymethyl methacrylate, polyphenylene sulfide, polyalkylene terephthalate, polyarylene terephthalate, polyphenylene oxide, polyphosphonate and polyether ester ketone.

2. An injection moulded article as claimed in claim 1, characterized in that the polyesterdiol is one based on a polyalkylene adipate or polyalkylene phthalate having a molecular weight of 1,000 to 8,000 and the diisocyanate is tolylene diisocyanate or hexamethylene diisocyanate.

3. A process for the production of a composite system joined by a coupling agent by encapsulation of the metal component by injection moulding with the thermoplastic melt of a plastic, characterized in that a polyurethane dispersion is applied to the metal moulding as coupling agent between metal and plastic by dip coating, spray coating, knife coating or printing, preferably in the region of the encapsulation of

6

thermoplastic plastic, solvents or dispersants are removed by drying, the polyurethane layer having dry film thicknesses of 2 to 80 $\mu$m and preferably 15 to 30 $\mu$m, and the metal component provided with the polyurethane coupling layer is encapsulated by injection moulding with the thermoplastic melt of a plastic.

4. A process as claimed in claim 3, characterized in that the thermoplastics used are based on cellulose ester, PVC, polyamide, polycarbonate, polysulfone, ABS, polymethyl methacrylate, polyphenylene sulfide, polyalkylene terephthalate, polyphenylene oxide, polyphosphonate and polyether ester ketone.

**Revendications**

1. Corps moulé par injection, comprenant un système composite métal-plastique lié par un adhésif, caractérisé en ce que la couche d'adhésif en polyuréthanne a des épaisseurs comprises entre 2 et 80 $\mu$m, de préférence entre 15 et 30 $\mu$m et que le composant en polyuréthanne est un système de dispersions de polyuréthanne à base d'un polyester-diol linéaire, d'un diisocyanate et de diamines contenant de l'acide carboxylique ou de l'acide sulfonique, le cas échéant en mélange avec d'autres diamines (cyclo)aliphatiques et que la matière plastique thermoplastique est un plastique à base d'ester de cellulose, de PVC, de polyamide, de polycarbonate, de polysulfone, d'ABS, de polyméthylméthacrylate, de sulfure de polyphénylène, de polyalkylène-téréphtalate, de polyarylènetéréphtalate, d'oxyde de polyphénylène, de polyphosphonate et de polyéther-ester-cétone.

2. Corps moulé par injection selon la revendication 1, caractérisé en ce que le polyesterdiol est un polyesterdiol à base d'un polyalkylène-adipinate ou d'un polyalkylène-phtalate de poids moléculaire compris entre 1 000 et 8 000 et que le diisocyanate est un toluylène-diisocyanate ou un hexaméthylène-diisocyanate.

3. Procédé de fabrication d'un système composite lié par un adhésif, par couverture par extrusion du composant métallique à l'aide de la masse fondue thermoplastique d'une matière plastique, caractérisé en ce qu'on dépose comme adhésif entre le métal et la matière plastique une dispersion de polyuréthanne selon un procédé par immersion, par pulvérisation, par étalement ou par pression sur le corps moulé métallique, de préférence dans la région du gainage par la matière plastique thermoplastique, qu'on sèche le solvant ou dispersant, en respectant des épaisseurs de film sec de couche de polyuréthanne comprises entre 2 et 80 $\mu$m, de préférence entre 15 et 30 $\mu$m, et en recouvrant le composant métallique doté de la couche adhésive de polyuréthanne, de la masse fondue thermoplastique d'une matière plastique.

4. Procédé selon la revendication 3, caractérisé en ce qu'on utilise comme matières plastiques thermoplastiques des matières plastiques à base d'ester de cellulose, de PVC, de polyamide, de polycarbonate, de polysulfone, d'ABS, de polyméthylméthacrylate, de sulfure de polyphénylène, de polyalkylènetéréphtalate, d'oxyde de polyphénylène, de polyphosphonate et de polyéther-ester-cétone.